(19) Europäisches Patentamt
European Patent Office
Office européen des brevets

(11) **EP 2 498 224 A1**

(12) **EUROPEAN PATENT APPLICATION**

(43) Date of publication:
**12.09.2012 Bulletin 2012/37**

(51) Int Cl.:
***G06T 11/00*** *(2006.01)*

(21) Application number: **11461507.3**

(22) Date of filing: **11.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Instytut Biologii Doswiadczalnej IM.M. Nenckiego Pan**
**02-093 Warszawa (PL)**

(72) Inventors:
• **Bartosiewicz, Rafal**
  **02-093, Warszawa (PL)**
• **Osinska, Magdalena**
  **02-093, Warszawa (PL)**
• **Wyroba, Elzbieta**
  **02-093, Warszawa (PL)**

(74) Representative: **Pawlowski, Adam**
**Eupatent.PL**
**Al. Kosciuszki 23/25**
**90-418 Lodz (PL)**

(54) **A method for three-dimensional imaging of microstructures using electron microscopy**

(57) A method for three-dimensional imaging of microstructures of a specimen using electron microscopy, comprising the steps of acquiring by electron microscopy a plurality of two-dimensional images of the specimen for different angles of rotation around a common rotation axis, processing the images to obtain intensity maps and combining the intensity maps to a three-dimensional model. The images are processed to obtain intensity maps by pre-aligning the acquired images, selecting a region of interest, cropping the pre-aligned images to a size larger than the region of interest, filtering the images to eliminate artifacts, selecting images with a level of artifacts lower than a threshold, aligning the selected images, processing the selected images with an iterative reconstruction algorithm to obtain intensity maps.

Fig. 3

EP 2 498 224 A1

**Description**

The present invention relates to three-dimensional imaging of microstructures using electron microscopy.

Three-dimensional imaging of microstructures with high resolution can have various fields of application. For example, visualization of antigens can help in the process of manufacturing of biopharmaceuticals. It can be also used to visualize effects of growth factors, hormones and their antagonists in pathological conditions. Moreover, it may allow analysis of composites to manufacture electrodes, cells (electrical batteries) etc.

A US patent US5402460 presents a method for microtomographic analysis of a specimen, including the steps of making a plurality of sets of projections of the specimen for different selected views of the specimen obtained by rotating the specimen around a rotation axis. These projections are combined into a three-dimensional model.

The three-dimensional model is based on microtomographic images converted to intensity maps. Typically, imaging methods used so far required manual selection of contours from a plurality of two-dimensional images. Three-dimensional images could be also constructed on the basis of intensity maps of microscopic images generated by computer-implemented methods, but the intensity map algorithms used so far for constructing 3D models, namely back-projection and weighted back-projection algorithms, were not efficient and not precise.

The aim of the present invention is to provide a method for three-dimensional imaging of microstructures with a high resolution and high precision.

The object of the invention is a method for three-dimensional imaging of microstructures of a specimen using electron microscopy, comprising the steps of acquiring by electron microscopy a plurality of two-dimensional images of the specimen for different angles of rotation around a common rotation axis, processing the images to obtain intensity maps and combining the intensity maps to a three-dimensional model. The images are processed to obtain intensity maps by pre-aligning the acquired images, selecting a region of interest, cropping the pre-aligned images to a size larger than the region of interest, filtering the images to eliminate artifacts, selecting images with a level of artifacts lower than a threshold, aligning the selected images, processing the selected images with an iterative reconstruction algorithm to obtain intensity maps.

The images can be acquired for rotation angle range from -70° to +70° with respect to initial specimen position with a resolution of one image per one degree of rotation.

The images can be acquired from a region distant from the axis of rotation not more than 1 mm.

The acquired images can be pre-aligned using a cross-correlation algorithm.

The iterative reconstruction algorithm can be an Algebraic Reconstruction Technique (ART). The number of iterations for the ART algorithm can be in the range of 8-15 and the relaxation coefficient can be in the range of 0,07-0,125.

The iterative reconstruction algorithm can be Simultaneous Iterative Reconstruction Technique (SIRT). The number of iterations for the ART algorithm can be above 30 and the relaxation coefficient is in the range of 0,7-1,3.

The method may further comprise marking specific regions of the intensity maps with different colors.

The present invention is shown by means of embodiments on a drawing, on which:

Fig. 1 shows the steps of the method according to the invention,
Fig. 2 shows the steps of the method for obtaining intensity maps,
Fig. 3 shows a 3D image obtained by the method of the present invention.
Fig. 4 shows a regular electron microscopic picture.

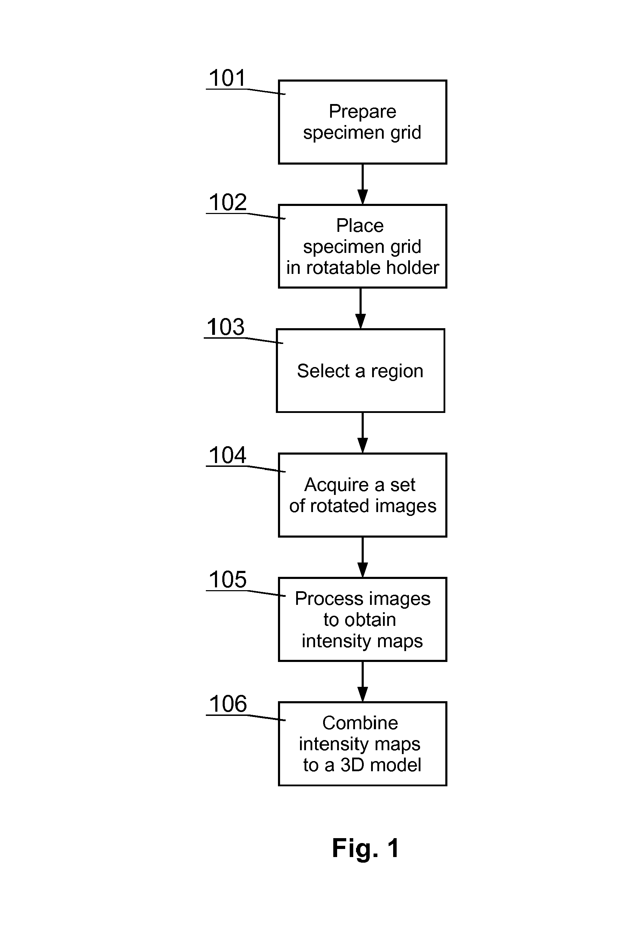

The present invention relates to a method for three-dimensional imaging of microstructures of a specimen using electron microscopy, as summarized on Fig. 1. In step 101 a specimen grid with a set of specimens is prepared. Preferably, a 3mm specimen grid is used. The specimen grid is placed in step 102 in a high tilt holder of an electron microscope, which is preferably a TEM with a magnification of at least 80000. Next, in step 103, a region for acquiring the images is selected. Preferably, the images are acquired from a region which is close to the rotation axis and distant from the mesh line. The distance from the mesh line should be larger than the width of the mesh line, so that the mesh line does not disturb the image during rotation. The distance from the rotation axis should be preferably not more than 1 mm. In step 104, a plurality of two-dimensional images of the selected region is acquired while rotating the specimen grid. Therefore, all images share a common rotation axis. Preferably, the specimen grid is rotated for a range of angles from -70° to +70° with respect to its initial position, for example horizontal, and an image is acquired for every 1 degree of rotation.

The resolution d of the images obtained can be specified by the equation:

$$d = \frac{\pi * T}{N}$$

wherein T is the thickness of the samples in nm and N is the number of images. For example, for samples of thickness 200nm and 141 images (obtained for each degree of rotation from $-70^0$ to $+70^0$), resolution of 4,45 nm can be achieved.

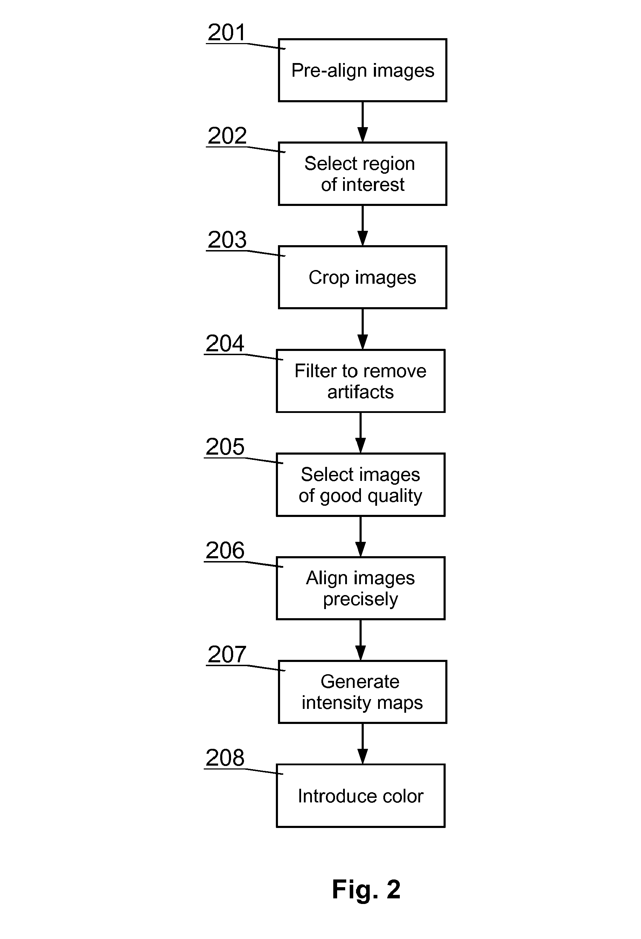

In the next step 105 the images are processed to obtain intensity maps, as explained with reference to Fig. 2. Finally, the intensity maps are combined to a three-dimensional model in step 106.

Fig. 2 shows in details the steps of processing the images to obtain intensity maps. In step 201 the images are pre-aligned to eliminate possible shifts between images, which may occur at large magnifications. Preferably, a cross-correlation algorithm is used for pre-alignment. It calculates a Fourier transform of the images and compares the images in the Fourier domain to correct shifts in subsequent images. Next, a region of interest is selected in step 202. The images are cropped in step 203 to the region of interest plus a frame equal to about 50% of the size of the region of interest. The frame will be useful in the subsequent step of precise alignment. In step 204 the images are filtered to remove artifacts. Single white pixels are eliminated, noise is reduced, the image is sharpened and contrast is enhanced by using high pass and low pass filters. Then, in step 205 the images of appropriate quality are selected, i.e. images having the level of artifacts lower than a threshold.

In step 206 the selected images are precisely aligned, preferably by the a cross-correlation algorithm or an algorithm based on characteristic points (e.g. a grid of points or local minima and maxima). For an algorithm based on characteristic points, the grid should have at least 200 points, the correlation coefficient should be preferably in the range of 0,7 to 0,9 and the characteristic points should cover at least 4 consecutive images. In case the algorithms are not efficient for all images, some of the images may have to be aligned manually. Properly aligned images should result in a series of images which, when viewed one after another, will not show any substantial shifts nor geometric deformations.

Next, in step 207 intensity maps are generated for the selected images using an iterative reconstruction algorithm, such as ART (Algebraic Reconstruction Technique) or SIRT (Simultaneous Iterative Reconstruction Technique). It has been found that the intensity maps generated with ART or SIRT algorithms result in much more precise 3D models than the models generated with the back-projection and weighted back-projection algorithms. The ART results in a grainier picture, while the SIRT algorithm is more smooth, therefore it is better for noisy images. The thickness of the specimen should be converted to a number of pixels, based on the resolution of the images. The axis of rotation should be oriented. The iterative reconstruction algorithms can be configured depending on reconstruction parameters including the number of iterations and a relaxation coefficient. The relaxation coefficient regulates the noise-sensitivity of the algorithm and convergence. For the ART algorithm, the number of iterations should be preferably in the range of 8-15, while the relaxation coefficient should be in the range of 0,07-0,125. For the SIRT algorithm, the number of iterations should be preferably higher than 30 and the relaxation coefficient should be in the range of 0,7-1,3.

Increasing the number of iterations results in a better intensity map, but extends the time of computations. The value of the relaxation coefficient can be defined based on the amount of noise-the more noise, the smaller the relaxation coefficient should be. The coefficient should be not too low, as the algorithm may not be able to finish the computations. Some ART and SIRT algorithm implementations can be also fine-tuned for cryo- and resin-embedded specimens.

The intensity maps generated this manner can be stored as positive and negative images to allow various visualizations of the specimen.

The resulting grayscale intensity maps may be colored in step 208 by indicating characteristic elements of the image. For example, specific pixels can be marked or groups of pixels of similar shade. For this purpose, a separate map can be prepared for each element and the individual maps can be combined at a later stage. The individual maps for pixels of similar colors can be created based on histograms, wherein 2 or 3 points are defined, having specific brightness and saturation. The positive or negative image of the intensity map can be used, depending on which one can better visualize the points. The obtained map can be then filtered using median filters, filters to remove small particles (useful to remove impuritie introduced while coloring of the specimen) or filters reducing the size of the map. Next, a color and transparency for each map can be selected.

The intensity maps are combined to a 3D model.

Example

The method has been applied to visualize two proteins, Rab7a and LAMP2 in the lysosomes. It proved that both these proteins colocalize in the secondary lysosome. The proteins Rab7a and LAMP2 were detected with double immunogold technique. At first the reaction with the specific primary antibodies (raised in guinea pig against Rab7a and in the rabbit against LAMP2) was performed. Next the secondary antibodies: anti-guinea pig conjugated with colloidal gold 12nm and anti-rabbit conjugated to colloidal gold 5 nm were used for detection.

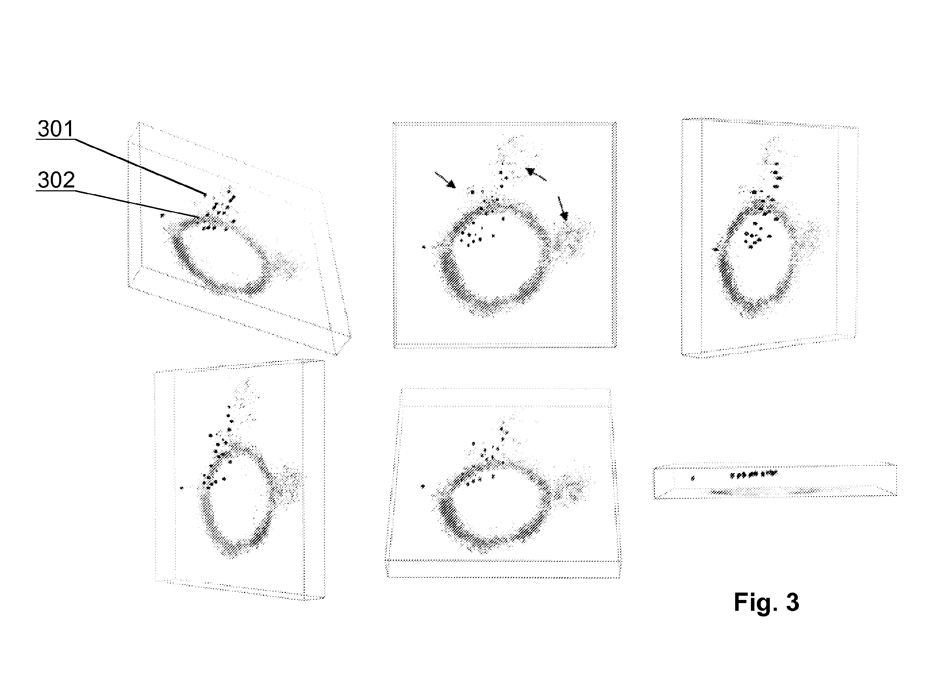

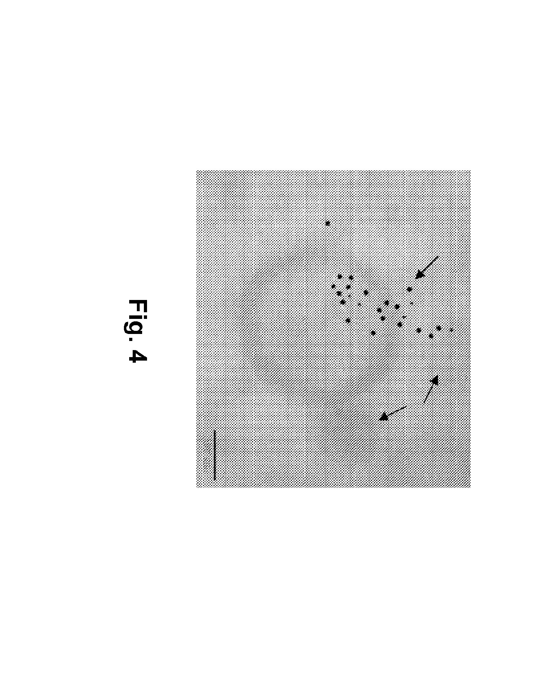

The resulting views of the 3D model are shown in Fig. 3 (Rab7a — 12 nm, reference numeral 301, LAMP2 - 5 nm — reference numeral 302; Bar 100 nm;). Fig. 3 illustrates not only the colocalization of both the proteins but also brings the evidence that some small primary lysosomes (shown with arrows) bearing both the analyzed proteins fuse with the secondary lysosome. This 3D model brings much more information than the regular electron microscopic picture shown in Fig.4.

The method allows monitoring various processes related to analyzed proteins, being a result of change in the expression level, e.g. due to growth factors, pathological disorders, cancer processes etc. Similarly, the changes in sub-cellular localization can be monitored, which means that — for instance - the analyzed protein may undergo relocation during cell division, to a different part of the cell than before the mitosis/cytokinesis.

Therefore, the method allows monitoring of localization of particular proteins/ antigens. The high resolution of the method, of the order of 5nm, enables 3D visualization of proteins and may also show their interaction tendencies.

The method may be also used for sub-cellular analysis of spatial architecture of organelles, their interconnecting structures and reciprocal relations in plant cells, animal cells and interoperation biopsy.

**Claims**

1.  A method for three-dimensional imaging of microstructures of a specimen using electron microscopy, comprising the steps of acquiring by electron microscopy a plurality of two-dimensional images of the specimen for different angles of rotation around a common rotation axis, processing the images to obtain intensity maps and combining the intensity maps to a three-dimensional model, **characterized by** processing the images to obtain intensity maps by:

    - pre-aligning the acquired images,
    - selecting a region of interest,
    - cropping the pre-aligned images to a size larger than the region of interest,
    - filtering the images to eliminate artifacts,
    - selecting images with a level of artifacts lower than a threshold,
    - aligning the selected images,
    - processing the selected images with an iterative reconstruction algorithm to obtain intensity maps.

2.  The method according to claim 1, wherein the images are acquired for rotation angle range from -70° to +70° with respect to initial specimen position with a resolution of one image per one degree of rotation.

3.  The method according to claim 1, wherein the images are acquired from a region distant from the axis of rotation not more than 1 mm.

4.  The method according to claim 1, wherein the acquired images are pre-aligned using a cross-correlation algorithm.

5.  The method according to claim 1, wherein the iterative reconstruction algorithm is an Algebraic Reconstruction Technique (ART).

6.  The method according to claim 0035, wherein the number of iterations for the ART algorithm is in the range of 8-15 and the relaxation coefficient is in the range of 0,07-0,125.

7.  The method according to claim 1, wherein the iterative reconstruction algorithm is Simultaneous Iterative Reconstruction Technique (SIRT).

8.  The method according to claim 7, wherein the number of iterations for the ART algorithm is above 30 and the relaxation coefficient is in the range of 0,7-1,3.

9.  The method according to claim 1, further comprising marking specific regions of the intensity maps with different colors.

101 Prepare
specimen grid

102 Place
specimen grid
in rotatable holder

103 Select a region

104 Acquire a set
of rotated images

105 Process images
to obtain
intensity maps

106 Combine
intensity maps
to a 3D model

**Fig. 1**

201 — Pre-align images

202 — Select region of interest

203 — Crop images

204 — Filter to remove artifacts

205 — Select images of good quality

206 — Align images precisely

207 — Generate intensity maps

208 — Introduce color

**Fig. 2**

Fig. 3

**Fig. 4**

Europäisches
Patentamt

European
Patent Office

Office européen
des brevets

**EUROPEAN SEARCH REPORT**

Application Number

EP 11 46 1507

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOACHIM FRANK ED  - FRANK JOACHIM: "Introduction: Principles of Electron Tomography", 1 January 2006 (2006-01-01), ELECTRON TOMOGRAPHY: METHODS FOR THREE-DIMENSIONAL VISUALIZATION OF STRUCTURES IN THE CELL, NEW YORK, NY : SPRINGER, US, PAGE(S) 1 - 15, XP008127360, ISBN: 978-0-387-31234-7 * figure 1 * * page 2, paragraph 2 * * page 5, paragraph 3 * * page 146 * * page 333 * * pages 73-74 * * pages 187-188 * * page 206 * * page 151 * * page 4 * * page 9 * * page 200 * & SAMI S BRANDT ED  - FRANK JOACHIM: "Markerless Alignment in Electron Tomography", ELECTRON TOMOGRAPHY: METHODS FOR THREE-DIMENSIONAL VISUALIZATION OF STRUCTURES IN THE CELL, NEW YORK, NY : SPRINGER, US, 1 January 2006 (2006-01-01), pages 187-217, XP008119988, ISBN: 978-0-387-31234-7 <br><br>-/-- | 1-9 | INV. G06T11/00 <br><br><br><br><br><br> TECHNICAL FIELDS SEARCHED  (IPC) <br><br> G06T |

The present search report has been drawn up for all claims

| Place of search | Date of completion of the search | Examiner |
|---|---|---|
| Munich | 19 July 2011 | Leclercq, Philippe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

Europäisches
Patentamt

European
Patent Office

Office européen
des brevets

# EUROPEAN SEARCH REPORT

Application Number

EP 11 46 1507

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | & Michael Marko, Chyong-Ere Hsieh, Carmen A. Mannella: "Electron Tomography of Frozen-hyrated Sections of Cells and Tissues"; "2"<br>In: JOACHIM FRANK ED - FRANK JOACHIM: "Introduction: Principles of Electron Tomography",<br>1 January 2006 (2006-01-01), ELECTRON TOMOGRAPHY: METHODS FOR THREE-DIMENSIONAL VISUALIZATION OF STRUCTURES IN THE CELL, NEW YORK, NY : SPRINGER, US, XP002651330,<br>ISBN: 978-0-387-31234-7<br>pages 49-81,<br>& Abraham J.Koster, Montserrat Barcena: "Cryotomography: Low-dose Automated Tomography of Frozen-hydrated Specimens"; "4"<br>In: JOACHIM FRANK ED - FRANK JOACHIM: "Introduction: Principles of Electron Tomography",<br>1 January 2006 (2006-01-01), ELECTRON TOMOGRAPHY: METHODS FOR THREE-DIMENSIONAL VISUALIZATION OF STRUCTURES IN THE CELL, NEW YORK, NY : SPRINGER, US, XP002651331,<br>ISBN: 978-0-387-31234-7<br>pages 113-161,<br>& Reiner Hegerl, Achilleas S. Frangakis: "Denoising of Electron Tomograms"; "11"<br>In: JOACHIM FRANK ED - FRANK JOACHIM: "Introduction: Principles of Electron Tomography",<br>1 January 2006 (2006-01-01), ELECTRON TOMOGRAPHY: METHODS FOR THREE-DIMENSIONAL VISUALIZATION OF STRUCTURES IN THE CELL, NEW YORK, NY : SPRINGER, US, XP002651332,<br>ISBN: 978-0-387-31234-7<br>pages 331-351,<br>----- | | TECHNICAL FIELDS SEARCHED (IPC) |

The present search report has been drawn up for all claims

| Place of search | Date of completion of the search | Examiner |
|---|---|---|
| Munich | 19 July 2011 | Leclercq, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 498 224 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5402460 A